# EUROPEAN PATENT APPLICATION

(11) **EP 3 449 733 A1**
(43) Date of publication of application: **06.03.2019**
(21) Application number: 17789000.1
(22) Date of filing: 09.02.2017
(51) Int. Cl.: A23K 40/30, A23K 10/30, A23K 40/00, A23K 50/42, A23K 50/45, B65D 85/50

(54) **FOOD GRANULE FOR PET FOOD, GRANULAR PET FOOD AND PET FOOD PACKAGE**

(30) Priority: 25.04.2016 JP 2016087117
(71) Applicant: Unicharm Corporation, Ehime 799-0111 (JP)
(72) Inventor: YAMANISHI Hiroto, Itami-shi Hyogo 664-0831 (JP); YOSHIDA Kotaro, Itami-shi Hyogo 664-0831 (JP)
(74) Representative: Staeger & Sperling Partnerschaftsgesellschaft mbB
(86) International application number: PCT/JP2017/004752
(87) International publication number: WO 2017/187711

(57) **Abstract**

Provided is a food granule for pet food, in which a coating layer (X) that contains fats and oils and melts in a temperature range of 30°C to 60°C is provided outside a core granule having a moisture content of 10% to 40% by mass, and a content of the coating layer (X) is in a range of 30% to 75% by mass with respect to the total content of granules.

## Description

### Technical Field

The present invention relates to a food granule for pet food, granular pet food, and a pet food package.

Priority is claimed on Japanese Patent Application No. 2016-087117, filed on April 25, 2016, the content of which is incorporated herein by reference.

### Background Art

Pet food has been studied in various ways in order for pets to pleasantly eat the pet food, in other words, in order to improve the palatability.

PTL 1 describes granular pet food whose palatability is improved when heated in a microwave immediately before feeding.

The granular pet food according to PTL 1 is devised such that the softness and the flavor of food granules are increased when heated in a microwave by blending specific modified starch and fats and oils into individual food granules. In the working examples of PTL 1, the surface of the food granule is coated with an external additive containing fats and oils such that the amount thereof is set to be 5.4% by mass of the total amount of granules (Table 2).

### Citation List

### Patent Literature

[PTL 1] Japanese Patent No. 5752310

### Summary of Invention

### Technical Problem

However, since the appearance of the food granules described in PTL 1 is not almost changed when heated, it is difficult for a feeder to determine whether the food granules have been heated, only by viewing the food granules.

An object of the present invention is to provide a food granule for pet food that shows a visual change when heated, granular pet food, and a pet food package.

### Solution to Problem

The present invention has the following aspects.
[1] A food granule for pet food, in which a coating layer (X) that contains fats and oils and melts in a temperature range of 30°C to 60°C is provided outside a core granule having a moisture content of 10% to 40% by mass, and a content of the coating layer (X) is in a range of 30% to 75% by mass with respect to the total content of granules.
[2] The food granule for pet food according to [1], in which the coating layer (X) contains powder which is in a solid state at 60°C, and an average particle diameter of the powder is 200 µm or less.
[3] The food granule for pet food according to [2], in which a content of the powder is in a range of 20% to 75% by mass with respect to the content of the coating layer (X).
[4] The food granule for pet food according to any one of [1] to [3], in which the coating layer (X) is formed of two or more layers with different compositions.
[5] The food granule for pet food according to any one of [1] to [4], in which an outermost surface of the food granule is provided with a gloss agent layer which is in a solid state at 60°C.
[6] Granular pet food including: the food granule for pet food according to any one of [1] to [5].
[7] The granular pet food according to [6], further including: other granules which do not correspond to the food granule for pet food.
[8] The granular pet food according to [7], in which a dried vegetable is provided as the other granule.
[9] A pet food package, in which the granular pet food according to any one of [6] to [8] is accommodated in a container formed of an easy-to-peel packaging material.

### Advantageous Effects of Invention

The food granule for pet food of the present invention shows a visual change when heated because the coating layer is melted.

The granular pet food of the present invention contains the food granule for pet food that shows a visual change when heated.

The pet food package of the present invention contains the food granule for pet food that shows a visual change when heated.

### Brief Description of Drawings

FIG. 1A is a photo related to Example 1, and the left side of the photo shows core granules before being coated and the right side thereof shows food granules after being coated.
FIG. 1B is a photo related to Example 1, and the left side of the photo shows food granules before being heated and the right side thereof shows food granules after being heated.
FIG. 2 is a photo related to Example 2, and the left side of the photo shows core granules before being coated and the right side thereof shows food granules after being coated.
FIG. 3 is a photo related to Example 3, and the left side of the photo shows core granules before being coated and the right side thereof shows food granules after being coated.
FIG. 4 is a photo related to Example 4, and the left side of the photo shows food granules before being heated and the right side thereof shows food granules after being heated.
FIG. 5 is a photo showing food granules after being coated, which have been obtained in Example 5.

### Description of Embodiments

### <Method of measuring moisture content>

An object to be measured is pulverized using a pulverizer so as to pass through a sieve having an opening diameter of 1 mm and then used as an analytical sample. 2 to 5 g of the analytical sample is accurately weighed, put into an aluminum weighing dish (after the sample is dried in advance, the weight thereof is accurately weighed), dried at a temperature of 135 ± 2°C for 2 hours, and left to be naturally cooled in a desiccator. Next, the weight thereof is accurately weighed, and then the moisture content is acquired from a difference between the weights of the sample weighed before and after the drying.

Since there is a possibility that a part of a coating layer is infiltrated into a surface layer portion of a core granule, the moisture content of the core granule is measured using the central portion of the core granule as an object to be measured.

### <Method of measuring average particle diameter>

In the present specification, the average particle diameter of powder is a value measured according to the following method.

A value obtained by analyzing a dispersion liquid in which powder to be measured is dispersed in a sparingly soluble solvent using a laser diffraction scattering device (LA-910 (product name), manufactured by HORIBA, Ltd., ultrasonic dispersion for 1 minute, using a flow cell) and reading a value (median diameter) at which the cumulative volume becomes 50% is set as an average particle diameter.

### <Method of measuring melting point>

In the present specification, the melting point (indicating a melting point range in a case of a mixture of a plurality of components) of fats and oils is a value obtained according to standard methods for the analysis of fats, oils, and derivatives.

### <<Food granule for pet food>>

A food granule (hereinafter, referred to as a food granule (z)) for pet food of the present invention is provided with a coating layer (X) outside a core granule.

### <Core granule>

The core granule is has a moisture content of 10% to 40% by mass and may have a granular shape (pellet) which can be applied as pet food.

In a case where the moisture content of the core granule is 10% by mass or greater, the effect of rapidly melting the coating layer using heat generation of the moisture in the core granule when the food granule (z) is heated in a microwave is excellent. Further, in a case where the moisture content of the core granule is 40% by mass or less, the storability is excellent. The moisture content of the core granule is preferably in a range of 12% to 40% by mass and more preferably in a range of 20% to 35% by mass.

The ingredients of the core granule are not particularly limited. Known ingredients in pet food can be used as appropriate. The core granule is obtained by heating and forming an ingredient mixture obtained by mixing powder ingredients and liquid ingredients.

The core granule may be a puffed granule or a non-puffed granule. The puffed granule indicates a granule produced by performing a puffing process of generating a gas in an ingredient mixture using a technique of carrying out heating, fermentation, a chemical reaction, or pressure reduction. In the puffing process, the volume of the ingredient mixture is increased due to the generation of a gas so as to have porous properties. Further, an increase in the volume of the ingredient mixture leads to a decrease in the bulk density. Before, after, or at the same time with the puffing process, puffed granules are obtained by forming the ingredient mixture in a granular shape.

Examples of the powder ingredients include cereals (such as corn, wheat, rice, barley, oat, and rye), beans (such as whole soybeans), starch (wheat starch, corn starch, rice starch, potato starch, tapioca starch, sweet potato starch, sago starch, and modified starch), proteins (for example, vegetable protein sources such as corn gluten meals, defatted soybeans, and soybean protein; and animal protein sources such as chicken meat, beef, pork, and venison, and meals (such as chicken meal, pork meal, beef meal, and mixed meal of these), seafood (such as fish meat and fish meal)), vegetables, and powdery additives (such as vitamins, inorganic salts, amino acids, saccharides, organic acids, flavoring ingredients, fibers, colorants, preservatives, emulsifiers, and palatability improvers). The meals indicate powder obtained by compressing meat or seafood and finely grinding the compressed meat or seafood. Examples of the palatability improvers include extract powder of animal ingredients such as livestock meat and seafood, extract powder of vegetable ingredients, and yeast powder.

Examples of the liquid ingredients include water, fats and oils, liquid sugar, a humectant, and an emulsifier. A humectant and an emulsifier may be added in a state of an aqueous solution.

The fats and oils may be vegetable fats and oils or animal fats and oils. From the viewpoint of easily obtaining high palatability, it is preferable to use animal fats and oils. Preferred examples of the animal fats and oils include chicken oil, lard, beef tallow (fat), and milk fats and oils.

As an example of the formulation of the core granule, a case where the total content of cereals, beans, and starch is in a range of 20% to 60% by mass, the total content of protein is in a range of 5% to 30% by mass, the content of water (including water to be added as a solvent) is in a range of 10% to 40% by mass, and the remainder is other components may be exemplified.

The size and the shape of the core granule are not particularly limited and can be designed such that a pet easily eats the core granule.

Examples of the shapes of the core granule include a spherical shape, a polygonal shape, a cylindrical shape, a donut shape, a plate shape, and a go stone shape (circular or curved tablet).

In the size of the core granule, for example, both of the shortest diameter and the longest diameter are preferably in a range of 3 to 30 mm, more preferably in a range of 6 to 16.5 mm, and still more preferably in a range of 8 to 12 mm.

### <Coating layer (X)>

The coating layer (X) is a layer that contains fats and oils and melts in a temperature range of 30°C to 60°C. Hereinafter, the fats and oils in the coating layer (X) are referred to as fats and oils (a).

The expression "the coating layer (X) melts in a temperature range of 30°C to 60°C" means that the coating layer (X) does not melt at 30°C and the temperature at which the melting starts is present between 30°C and 60°C.

The coating layer (X) may contain one or both of a component that does not melt at 60°C (a component which is in a solid state at 60°C) (b) (hereinafter, also referred to as a component (b)) and other components (c) (hereinafter, also referred to as components (c)) in a liquid state at 60°C, in addition to the fats and oils (a).

The coating layer (X) may be a layer having a uniform composition and may be a laminate formed of a plurality of layers having different compositions.

The proportion of the coating layer (X) in the entirety of the food granules (z) is in a range of 30% to 75% by mass. In a case where the proportion thereof is 30% by mass or greater, a visual change due to the melting of the coating layer (X) when heated is sufficiently obtained.

The proportion of the coating layer (X) is preferably in a range of 30% to 50% by mass, more preferably in a range of 30% to 45% by mass, and still more preferably in a range of 30% to 40% by mass.

The confirmation of "the coating layer (X) melts in a temperature range of 30°C to 60°C" is made by performing a heating test in the following manner.

### [Heating test]

50 g of food granules (z) are used as a test object. The food granules (z) (room temperature, mass x1) whose mass has been measured in advance are placed on an absorption sheet whose mass has been measured in advance, and a mass (x2) of the food granules (z) after being held in an environment of 30°C for 30 minutes is measured. The absorption sheet is not limited as long as the absorption sheet absorbs a liquid in which the coating layer (X) is melted, and filter paper or tissue paper can be used.

In a case where the change rate of the mass to be measured by an expression of "(x1 - x2)/x1 × 100" is within the error range (±5%), it is determined that the coating layer (X) is not melted at 30°C.

Next, a mass (x4) of the food granules (z) is measured by heating the food granules (z) (30°C, mass x3) in a state of being placed on the absorption sheet until the temperature thereof reaches 60°C using a microwave and then naturally cooling the food granules (z) to room temperature. The temperature of the food granules (z) is confirmed using an infrared radiation thermometer (manufactured by SATO KEIRYOKI MFG. CO., LTD., model number: SK-8920).

In a case where the change rate of the mass to be measured by an expression of "(x3 - x4)/x3 × 100" is within the error range (±5%), it is determined that the coating layer (X) is not melted at 60°C. Further, in a case where the change rate thereof is out of the error range, it is determined that the coating layer is melted in a temperature range of 30°C to 60°C.

The proportion of the coating layer (X) in the food granule (z) can be measured in the following manner. The fats and oils (a), the component (b) that does not melt at 60°C, and other components (c) in a liquid state at 60°, which are contained in the coating layer (X), can be separated according to the following method.

In the heating test, the food granules (z) (room temperature, mass x4) after being heated at 60°C in a microwave and being left to be naturally cooled to room temperature are placed on the absorption sheet, and a mass (x5) of the food granules (z) after being held in an environment of 60°C for approximately 30 minutes so that the coating layer (X) is melted and removed and being left to be naturally cooled to room temperature is measured.

The value of (x1 - x5) is set as the mass of the coating layer (X). The proportion of the coating layer (X) in the entirety of the food granules (z) is acquired using an expression of "(x1 - x5)/x1 × 100".

The fats and oils (a) and the components (c) are absorbed by the absorption sheet immediately after being taken out from the environment of 60°C, and the component (b) is present on the absorption sheet.

The content of the fats and oils (a) in the liquid absorbed by the absorption sheet is measured according to the following method, and the rest is set as the content of the components (c).

### [Method of measuring content of fats and oils]

The content of fats and oils is measured according to the method (acid decomposition diethyl ether extraction method) described in Fair Code Enforcement Regulation in regard to the display of pet food.

12 g of an analytical sample is accurately weighed and put into a 100 mL beaker, 2 mL of ethanol is added to the beaker, the solution is mixed using a glass rod so that the sample is moistened, 20 mL of hydrochloric acid (4:1) is added, the beaker is covered by watch glass, and the solution is occasionally stirred in a water bath at 70°C to 80°C, heated for 1 hour, and then left to be naturally cooled.

The contents in the above-described beaker are put into a 200 mL separatory funnel A, the beaker is sequentially washed with 10 mL of ethanol and 25 mL of diethyl ether, and the washing solution is added to the separatory funnel A.

Further, 75 mL of diethyl ether is added to the separatory funnel A, and the solution is shaken, mixed, and then allowed to stand still. The diethyl ether layer (upper layer) is taken out using a pipette or the like and added to a 300 mL separatory funnel B to which 20 mL of water has been added in advance.

50 mL of diethyl ether is added to the separatory funnel A, the same operation is performed twice, and each diethyl ether layer is taken out using a pipette or the like and added to the separatory funnel B.

The separatory funnel B is shaken so that the solution is mixed and then allowed to stand still, and the water layer (lower layer) is disposed. 20 mL of water is further added to the separatory funnel B and the same operation is performed twice. The diethyl ether layer is filtered to a fat weighing bottle or a 300 mL eggplant type flask (which has been dried at 95°C to 100°C in advance and left to be naturally cooled in a desiccator and whose weight has been accurately weighed) using a funnel which has been filled with absorbent cotton in advance and to which 10 g or greater, as an appropriate amount, of sodium sulfate (anhydrous) has been added.

Next, diethyl ether in the above-described fat weighing bottle or diethyl ether in the above-described eggplant type flask is recovered respectively using a Soxhlet extractor or a rotary evaporator. The fat weighing bottle or the eggplant flask is removed, the diethyl ether is volatilized, the resultant is dried at 95°C to 100°C for 3 hours, left to be naturally cooled in a desiccator, the weight thereof is accurately weighed, and then the content of the fats and oils in the analytical sample is calculated.

### [Fats and oils (a)]

The fats and oils (a) contain one or more fats (a1) having a melting point of 20°C to 60°C. Further, the fats and oils (a) may contain one or more oils (a2) having a melting point of -60°C or higher and lower than 20°C.

Specific examples of the fats (a1) include palm oil, beef tallow, lard, chicken fat, milk fat, cacao butter, coconut butter, palm kernel oil, and modified fat and oil. The amount of the fats (a1) is preferably in a range of 80% to 100% by mass, more preferably in a range of 90% to 100% by mass, and particularly preferably in a range of 95% to 100% by mass with respect to the total amount of the fats (a) in the coating layer (X).

In the fats (a1), fats (a11) having a melting point of 25°C to 50°C are more preferable. Specific examples thereof include beef tallow and palm oil. The content of the fats (a11) is preferably in a range of 80% to 100% by mass, more preferably in a range of 90% to 100% by mass, and particularly preferably in a range of 95% to 100% by mass with respect to the total content of the fats (a) in the coating layer (X).

Specific examples of the oils (a2) include fish oil, linseed oil, safflower oil, sunflower oil, soybean oil, rapeseed oil, corn oil, cottonseed oil, rice oil, olive oil, and peanut oil. The content of the oils (a2) is preferably 20% by mass or less with respect to the content of the fats and oils (a).

### [Component (b)]

The component (b) is powder which is in a solid state at 60°C. The average particle diameter of the component (b) that is present in the coating layer is preferably 200 µm or less. In a case where the coating layer (X) contains such a powdery component (b), the shape retainability is improved and the thickness of the coating layer (X) can be further increased. In a case where the average particle diameter of the component (b) is 200 µm or less, the effect of improving the shape retainability is excellent.

The component (b) may be powder which can be applied as pet food, and powder which can easily obtain the palatability of pets is preferable. Specific examples of the powder include powder sugar, animal extract powder, plant extract powder, yeast powder, yeast extract powder, cereals, starch, seeds, beans, seafood, meat, eggs, milk, vegetables, fruits, mushrooms, and algae. Among these, from the viewpoint of the palatability, it is preferable that the component (b) contains one or more selected from the group consisting of powder sugar, animal extract powder, plant extract powder, yeast powder, and yeast extract powder.

The component (b) in the coating layer (X) may be used alone or two or more kinds thereof. In a case where the coating layer (X) contains two or more components (b), all component (b) may be contained in one layer or different kinds of components (b) may be contained in a plurality of layers constituting the coating layer (X).

### [Components (c)]

Examples of the components (c) include palatability improvers (such as animal extracts, plant extracts, yeast extracts, and protein hydrolyzates), yeasts, saccharides, amino acids, nucleic acids, flavoring ingredients, and colorants.

### [Composition of coating layer (X)]

The content of the fats and oils (a) is preferably 25% by mass or greater with respect to the content of the coating layer (X). The content thereof may be 100% by mass.

In a case where the coating layer (X) contains the component (b) which is in a solid state at 60°C, the content of the component (b) is preferably in a range of 20% to 75% by mass, more preferably in a range of 40% to 75% by mass, and particularly preferably in a range of 50% to 60% by mass with respect to the content of the coating layer (X). In a case where the content of the component (b) is 20% by mass or greater, the effect of improving the shape retainability is excellent. In a case where the content thereof is 75% by mass or less, the balance between the component (b) and components other than the component (b) is excellent.

In a case where the coating layer (X) contains the components (c) in a liquid state at 60°C, the content of the components (c) is preferably 20% by mass or less with respect to the content of the coating layer (X).

### <Gloss agent layer>

The outermost surface of the food granule (z) may be provided with a gloss agent layer which is in a solid state at 60°C. In a case where a gloss agent layer is provided, the stickiness of the surface of the food granule (z) during the storage or in the process of production of a pet food package after the production of the food granules (z) is suppressed.

The gloss agent layer is formed by applying a gloss agent composition and solidifying the composition.

The gloss agent composition contains one or more gloss agents selected from the group consisting of hydroxypropylmethyl cellulose (HPMC), hydroxypropyl cellulose (HPC), zein, acacia gum, E-Strap, Maltitol Granule, Isomalt Granule, crystalline cellulose, shellac, shellac, yellow bees wax, carnauba wax, and Urushi wax.

Further, the gloss agent composition may contain optional components such as a sweetener in addition to the gloss agent. The content of the gloss agent is 10% by mass or greater, preferably 20% by mass or greater, and may be 100% by mass with respect to the content of the gloss agent composition.

The content of the gloss agent layer is preferably in a range of 0.01% to 20% by mass and more preferably in a range of 0.1% to 5% by mass with respect to the content of the food granules. In a case where the content of the gloss agent layer is greater than or equal to the above-described lower limit with respect to the content of the food granules, the effect of suppressing the stickiness is excellent. In a case where the content thereof is less than or equal to the above-described upper limit, the meltability of the coating layer at the time of heating the food granules is excellent.

### <Method of producing food granule (z)>

The food granule (z) can be produced according to a method of repeatedly performing a process of coating the surface of the core granule with a fat and oil composition containing the fats and oils (a) and solidifying the composition a plurality of times to form the coating layer (X). Further, a gloss agent layer may be formed.

Specifically, the fat and oil composition is heated to 60°C or greater so that the composition has a fluidity, the surface of the core granule is coated with this composition and cooled, and the composition is solidified, thereby forming a layer formed of the fat and oil composition. The coating and the solidifying of the fat and oil composition are repeated until the coating layer (X) has a desired thickness.

A known method can be appropriately used as the method of coating the surface of the core granule with the fat and oil composition.

Examples of such a known method include a method of adding and mixing a fat and oil composition while stirring core granules and a method of immersing core granules in a fat and oil composition and pulling up the core granules.

The fat and oil composition used for forming the coating layer (X) may be used alone or two or more kinds thereof with different compositions.

Specifically, by repeatedly performing the coating and the solidifying of one kind of fat and oil composition a plurality of times, the coating layer (X) formed of one layer having a uniform composition and a desired thickness can be formed.

Further, by performing the coating and the solidifying of one kind of fat and oil composition once or twice or more times to form an inner layer (for example, an external additive layer) and performing coating and solidifying of another fat and oil composition once or twice or more times, an outer layer can be formed on the surface of the inner layer. In this manner, the coating layer (X) formed of a laminate with a plurality of layers can be formed.

For example, the food granule (z) can be produced by performing a process of coating the surface of the core granule with a liquid external additive (first fat and oil composition) containing the fats and oils (a) and solidifying the composition once or more times to form an external additive layer and performing a process of coating the surface of the external additive layer with a fat and oil composition (second fat and oil composition) which contains fats and oils (a) and has a composition different from the composition of the external additive once or more times. The fats and oils (a) in the external additive and the fats and oils (a) in the second fat and oil composition may be the same as or different from each other.

The external additive (first fat and oil composition) may contain a powdery palatability improver (component (b)).

The second fat and oil composition may be used two or more kinds thereof with different compositions. According to this method, a food granule is obtained by providing an external additive layer on the surface of the core granule and providing a fat and oil composition layer containing the fats and oils (a) on the surface of the external additive layer.

### <<Granular pet food>>

Granular pet food (hereinafter, also simply referred to as pet food) of the present invention contains the food granules (z). The pet food may contain only the food granules (z) or may contain other granules that do not correspond to the food granules (z).

As the pet food of the present invention, pet food to be heated before feeding is preferable. The heating means is not limited, pet food to be heated in a microwave before feeding is more preferable. The temperature of the pet food after the heating is completed is preferably in a range of 55°C to 65°C and more preferably in a range of 60°C to 65°C.

Other granules that do not correspond to the food granules (z) are granules that occupy 30% to 75% by mass with respect to the total content of granules and do not have a coating layer (X), and are not particularly limited.

Examples of other granules include dried food granules having a moisture content of less than 10% by mass, semi-moist food granules which have a moisture content of 10% by mass or greater and are not included in the food granules (z), dried vegetables, dried meat, and dried seafood.

In the pet food containing such food granules (z) and other granules, since the coating layer (X) of the food granules (z) is melted and enters a liquid state when heated and the liquid is entangled with other granules, other granules appear to be more delicious. Further, the palatability of other granules can be improved.

### <<Pet food package>>

The form of a pet food product according to the present invention is not particularly limited, but a form of a pet food package formed by accommodating the pet food in a container formed of an easy-to-peel packaging material is preferable. Since the easy-to-peel packaging material has excellent release properties, adhesion of the melted material of the coating layer (X) to the inner surface of the container is suppressed. Therefore, the total amount of the heated pet food can be smoothly taken out from the container.

Known materials can be suitably used as the easy-to-peel packaging material. A material having heat resistance is preferable. A material which can be heated in a microwave is preferable.

Preferred examples of the material include a polymer blend of an ethylene-propylene random copolymer and linear low density polyethylene (LLDPE); a polymer blend obtained by combining a polypropylene-based resin and high density polyethylene, low density polyethylene, or an ethylene-vinyl acetate copolymer; a polymer blend, for example, random PP, PE, or PS such as polypropylene (PP) and polyethylene (PE) or polystyrene (PS) and polyethylene (PE); and a CF film (TORAY ADVANCED FILM CO., LTD.) of a special polymer composite containing a polyethylene-based polymer as a base.

The shape of the container is not particularly limited. For example, the shape thereof may be a bag shape or a shape obtained by heat-sealing an opening portion of a bowl-shaped container with a packaging film.

It is preferable that the pet food package is formed such that an amount of pet food to be used in one occasion is accommodated in a container. An amount to be used in one occasion indicates an amount of pet food to be used up in one feeding, that is, one feeding amount or an amount of pet food obtained by subdividing a part thereof.

It is preferable that the container is provided with a note related to heating immediately before feeding. The note may be related to a heating method or a heating condition in which the temperature of the pet food is set to be a preset target temperature. Specifically, the note may be related to the time for immersing the pet food in boiling water in a heating method using a water bath. Alternatively, the note may be related to a rated high frequency output (wattage) according to a heating method using a microwave.

### Examples

The present invention will be described in detail with reference to the examples described below, but the present invention is not limited thereto.

### <Ingredients>

The following ingredients were used.
Fats and oils (1): CHARIOT (product name, manufactured by ADEKA CORPORATION, modified fats and oils), melting point of 42°C
Fats and oils (2): palm oil, melting point of 30°C
Powder sugar: average particle diameter of 50 µm

### <Production Example 1: production of core granules (1) provided with external additive layer>

An ingredient mixture formed of 40% by mass of cereals, beans, and starch, 20% by mass of proteins, 25% by mass of water (including water to be added as a solvent), and 15% by mass of other components was put into an extruder and subjected to a heat treatment at approximately 115°C ± 15°C for approximately 2 minutes while kneading, and the mixture was puffed simultaneously with being extruded and granulated in a granular shape in an outlet of the extruder. The obtained puffed granules (core granules) were coated with beef tallow (melting point of 42°C) as an external additive and cooled to room temperature without being subjected to a drying process, thereby obtaining core granules (1) provided with an external additive layer. The moisture content in a central portion of each core granule (1) was 21% by mass. The coating amount of the external additive was set to 2.7% by mass with respect to the mass of the core granules (1) including the external additive layer.

The core granules (1) have a go stone shape, and the shortest diameter thereof is in a range of 7.5 to 9.5 mm and the longest diameter thereof is in range of 8.5 to 10.5 mm.

Food granules were produced under conditions listed in Table 1. Examples 1, 2, 4, and 5 are examples and Example 3 is a comparative example.

### <Example 1>

The fats and oils (1), the fats and oils (2), and powder sugar were mixed with the formulation listed in Table 1 in advance and heated to 60°C, thereby preparing a fat and oil composition.

Next, the core granules were coated with the fat and oil composition according to a method of adding 10 g of the fat and oil composition which had been heated to 60°C to 50 g of the core granules (1) and mixing the mixture while stirring the core granules, and the mixture was held and cooled in a freezer at -20°C for 5 minutes, and a layer (first layer) formed of the fat and oil composition was solidified.

Each particle on which the first layer was formed was coated with the fat and oil composition according to a method of adding 10 g of the fat and oil composition which had been heated to 60°C to the particles and mixing the mixture while stirring the particles, and the mixture was cooled in the same manner as described above, thereby forming a second layer.

These operations were repeated until a predetermined coating amount was obtained, thereby obtaining target food granules.

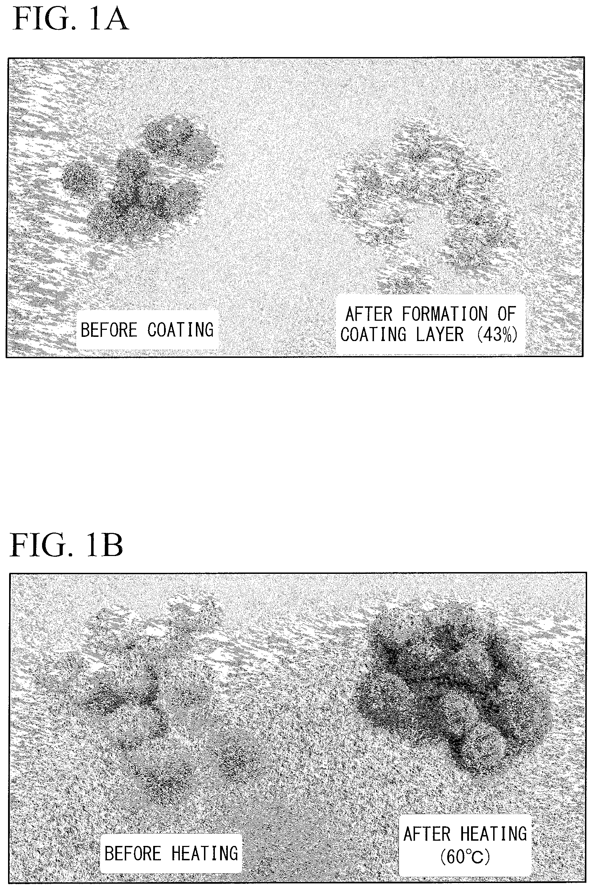

In FIG. 1A, the left side of the photo shows core granules (1) before being coated and the right side thereof shows the food granules after the coating layer was formed thereon in the present example. As shown in this photo, the core granules (1) which had been brown or green were respectively coated with a white coating layer. Therefore, the food granules appear to be white.

The above-described heating test was performed on the obtained food granules to confirm that the coating layer was melted in a temperature range of 30°C to 60°C. Further, the proportion of the coating layer in the entirety of the food granules was acquired. The results thereof are listed in Table 1 (the same applies hereinafter). The proportion of the coating layer in the entirety of the food granules is smaller than the proportion of the applied fat and oil composition in the entirety of the food granules. The reason for this is assumed that a part of the fat and oil composition was infiltrated into the core granules.

In FIG. 1B, the left side of the photo shows the food granules (before being heated in a microwave) obtained in the present example, and the right side thereof shows the state of the food granules after being heated in a microwave at 60°C. The coating layer was melted when heated and the color tone of the food granules was clearly changed.

### <Example 2>

Food granules were produced by changing the coating amount of the fat and oil composition using the core granules (1) produced in the same manner as in Example 1 and the same fat and oil composition as in Example 1.

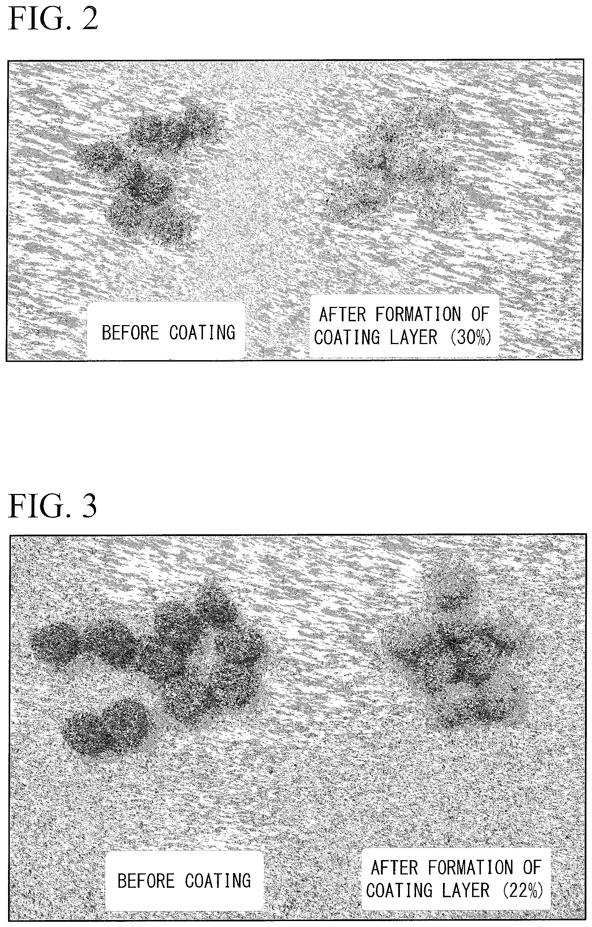

In FIG. 2, the left side of the photo shows core granules (1) before being coated and the right side thereof shows the food granules after the coating layer was formed thereon in the present example. As shown in this photo, the core granules (1) which had been brown or green were respectively coated with a white coating layer. Therefore, the food granules appear to be white.

The above-described heating test was performed on the obtained food granules to confirm that the coating layer was melted in a temperature range of 30°C to 60°C. The coating layer was melted when the food granules obtained in the present example were heated in a microwave at 60°C, and the color tone of the food granules was changed.

### <Example 3 (comparative example)>

Food granules were produced by changing the coating amount of the fat and oil composition using the core granules (1) produced in the same manner as in Example 1 and the same fat and oil composition as in Example 1.

In FIG. 3, the left side of the photo shows core granules (1) before being coated and the right side thereof shows the food granules after the coating layer was formed thereon in the present example. As shown in this photo, a change in the color tone of the core granules (1) which had been brown or green was small, and the food granules did not appear to be white. The coating layer was melted when the food granules obtained in the present example were heated in a microwave at 60°C, but a change in the color tone was small.

### <Example 4>

In the present example, the core granules (1) produced in the same manner as in Example 1 were coated with a fat and oil composition containing a smaller content of powder sugar than those of Examples 1 to 3 to produce food granules.

The above-described heating test was performed on the obtained food granules to confirm that the coating layer was melted in a temperature range of 30°C to 60°C.

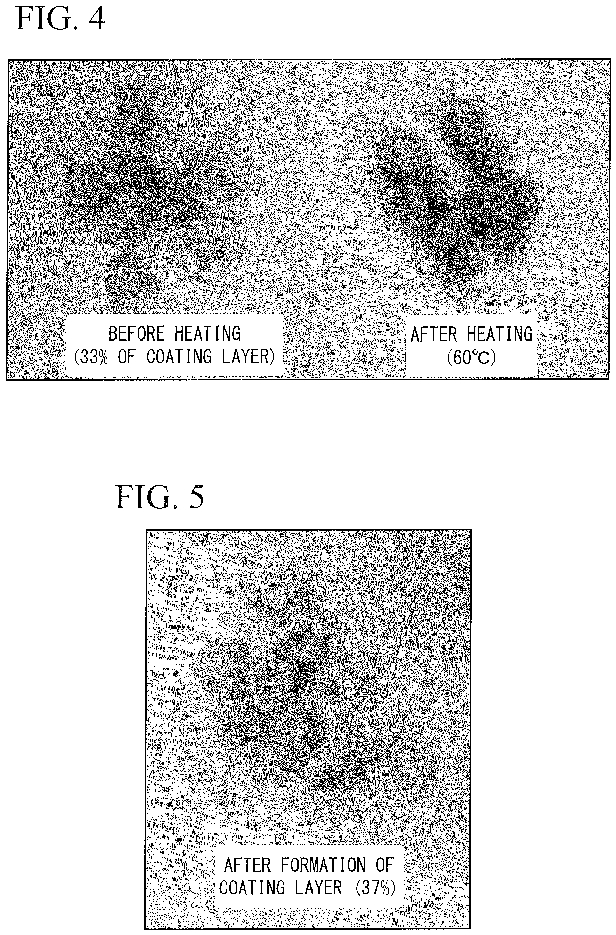

In FIG. 4, the left side of the photo shows the food granules (before being heated) on which the coating layer was formed in the present example, and the right side thereof shows the state of the food granules after being heated in a microwave at 60°C. As shown in this photo, the core granules (1) which had been brown or green were respectively coated with a white coating layer. Therefore, the food granules appear to be white. The coating layer was melted when heated in a microwave at 60°C and the color tone of the food granules was clearly changed.

### <Example 5>

In the present example, the core granules (1) produced in the same manner as in Example 1 were coated with a fat and oil composition free of powder sugar to produce food granules.

FIG. 5 is a photo showing the food granules obtained in the present example. The core granules (1) which had been brown or green were respectively coated with a white coating layer. Therefore, the food granules appear to be white.

The above-described heating test was performed on the obtained food granules to confirm that the coating layer was melted in a temperature range of 30°C to 60°C. The coating layer was melted when the food granules obtained in the present example were heated in a microwave at 60°C, and the color tone of the food granules was changed.

**[Table 1]**

| | | Example 1 | Example 2 | Example 3 | Example 4 | Example 5 |
|---|---|---|---|---|---|---|
| Formulation of fat and oil composition [% by mass] | Fats and oils (1) | 27 | | | 11 | - |
| | Fats and oils (2) | 23 | | | 69 | 100 |
| | Powder sugar | 50 | | | 20 | - |
| | Total | 100 | | | 100 | 100 |
| Coating amount of fat and oil composition with respect to total amount of food granules [% by mass] | | 50 | 33 | 25 | 36 | 40 |
| Proportion of coating layer (X) in entirety of food granules [% by mass] | | 43 | 30 | 22 | 33 | 37 |
| Proportion of powder in coating layer (X) [% by mass] | | 58 | 55 | 57 | 22 | 0 |
| Photo | | FIG. 1(A) | FIG. 2 | FIG. 3 | FIG. 4 | FIG. 5 |
| | | FIG. 1(B) | | | | |

As described above, a visual change caused by heating the food granules is sufficiently obtained by providing the coating layer (X) to be melted when heated outside the core granule such that the content of the coating layer (X) is set to 30% by mass or greater with respect to the total content of the food granules.

## Claims

1. A food granule for pet food,
wherein a coating layer (X) that contains fats and oils and melts in a temperature range of 30°C to 60°C is provided outside a core granule having a moisture content of 10% to 40% by mass, and
a content of the coating layer (X) is in a range of 30% to 75% by mass with respect to the total content of granules.

2. The food granule for pet food according to claim 1,
wherein the coating layer (X) contains powder which is in a solid state at 60°C, and
an average particle diameter of the powder is 200 µm or less.

3. The food granule for pet food according to claim 2,
wherein a content of the powder is in a range of 20% to 75% by mass with respect to the content of the coating layer (X).

4. The food granule for pet food according to any one of claims 1 to 3,
wherein the coating layer (X) is formed of two or more layers with different compositions.

5. The food granule for pet food according to any one of claims 1 to 4,
wherein an outermost surface of the food granule is provided with a gloss agent layer which is in a solid state at 60°C.

6. Granular pet food comprising:
the food granule for pet food according to any one of claims 1 to 5.

7. The granular pet food according to claim 6, further comprising:
other granules which do not correspond to the food granule for pet food.

8. The granular pet food according to claim 7,
wherein a dried vegetable is provided as the other granule.

9. A pet food package,
wherein the granular pet food according to any one of claims 6 to 8 is accommodated in a container formed of an easy-to-peel packaging material.
